(19) Europäisches Patentamt
European Patent Office
Office européen des brevets

(11) EP 2 404 950 A1

(12) **EUROPÄISCHE PATENTANMELDUNG**

(43) Veröffentlichungstag:
**11.01.2012 Patentblatt 2012/02**

(51) Int Cl.:
***C08G 77/445*** *(2006.01)* ***C08L 83/10*** *(2006.01)*

(21) Anmeldenummer: **11169046.7**

(22) Anmeldetag: **08.06.2011**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **08.07.2010 DE 102010031087**

(71) Anmelder: **Evonik Goldschmidt GmbH**
**45127 Essen (DE)**

(72) Erfinder:
- **Hartung, Christian**
  **45133 Essen (DE)**
- **Ferenz, Michael**
  **45147 Essen (DE)**
- **Knott, Wilfried**
  **45355 Essen (DE)**
- **Ritter, Helmut**
  **42111 Wuppertal (DE)**
- **Fiedel, Michael**
  **40599 Düsseldorf (DE)**

(54) **Neuartige polyestermodifizierte Organopolysiloxane**

(57) Die Erfindung betrifft neuartige Polyester-Polysiloxan-Blockcopolymere, Verfahren zu deren Herstellung sowie deren Verwendung.

EP 2 404 950 A1

## Beschreibung

Die Erfindung betrifft neuartige Polyester-Polysiloxan-Blockcopolymere, Verfahren zu deren Herstellung sowie deren Verwendung.

Organomodifizierte Siloxane werden in den verschiedensten Applikationen eingesetzt. Ihre Eigenschaften lassen sich durch die Art der Modifikation sowie durch die Modifikationsdichte gezielt einstellen.

Blockcopolymere können die Eigenschaften der einzelnen Polymertypen in sich vereinen und sind daher für viele Anwendungen sehr interessant. Polyester-Polysiloxan-Blockcopolymere werden beispielsweise in US 4,663,413 beschrieben. Zum Aufbau der Polyester-Polysiloxan-Blockcopolymere werden hier ausschließlich ε-Caprolacton und linear α,ω-modifizierte Siloxane eingesetzt. Die Produkte werden als Oberflächenmodifizierungsmittel für andere Polymere genutzt. In US 3,778,458 wird die Hydrosilylierung von Polyether-Polyester-Copolymeren beschrieben. Zur Herstellung des Polyestersegments wird hier ebenfalls ausschließlich ε-Caprolacton benutzt. In US 5,194,473 wird die Verwendung von Polyestersiloxanen in bioabsorbierbaren Materialen für die Medizin beschrieben. Das Polyestersegment basiert hier auf Polymerisation von Lactid oder Glycolid. Mehrfach mit Seitenketten substituierte Lactone wie z.B. 3,3,5-Trimethylcaprolacton werden nicht beschrieben. Auch in Yilgör et al. (Journal of Polymer Science (Part A: Polymer Chemistry) 1989, Vol. 27, 3673-3690), Lovinger et al. (Journal of Polymer Science (Part B: Polymer Physics) 1993, Vol. 31, 115-123), Kricheldorf et al. (Macromol. Biosci. 2001, 1, 364-369) und Clarson et al. (Silicon 2009, 1, 165-172) wird die Synthese von Polyester-Polysiloxan-Blockcopolymeren beschrieben, die durch die Anlagerung von ε-Caprolacton an hydroxyfunktionelle Siloxane erfolgt.

Auch kommerzielle Produkte auf Basis von Polyester-Polysiloxan-Blockcopolymeren existieren und werden z.B. unter dem Markennamen TEGOMER® H-Si 6440 P (Evonik Goldschmidt GmbH, Deutschland) verkauft. Diese werden beispielsweise als Kunststoffadditive eingesetzt.

Die mit großtechnisch verfügbaren Lactonen wie ε-Caprolacton hergestellten Polyester-Polysiloxan-Blockcopolymere sind bei Polyestergehalten von ca. ≥50% wachsartig bzw. fest. Dies kann bei gewissen Anwendungen zu Problemen bei der Formulierbarkeit führen. Zudem sind diese Polyester-Polysiloxan-Blockcopolymere auf Basis von z.B. ε-Caprolacton üblicherweise schlecht löslich (bzw. nicht klar löslich) in beispielsweise kosmetischen Ölen wie $C_{12}$-$C_{15}$-Alkylbenzoat. Für eine effektive Anwendbarkeit und Einsatzfähigkeit ist jedoch eine ausreichende Kompatibilität mit dem jeweiligen Medium wie beispielsweise dem kosmetischen Öl oder dem zu modifizierenden Polymer notwendig.

Mehrfach substituierte Lactone mit Alkylseitenketten (d.h. ≥2 Alkylseitenketten am Lactonring) sind im Vergleich zu unsubstituierten Lactonen wie ε-Caprolacton üblicherweise sehr viel schwieriger zu Polyester umzusetzen. Sterische Gründe erschweren die Polymerisation, und es werden mit den üblichen Verfahren nur geringe Umsätze an Lacton erreicht. Block-Copolymere mit Siloxanen sind aufgrund von Kompatibilitätsproblemen noch schwieriger zu erhalten. Aus diesem Grund sind in der Literatur keine expliziten Untersuchungen zur Umsetzung von Siloxanen mit mehrfach substituierten Lactonen zu finden.

Ein technisch zugängliches, mehrfach Seitenketten tragendes Lacton stellt Trimethylcaprolacton (3,3,5-Trimethylcaprolacton C A S [2549-56-6] und 3,5,5-Trimethylcaprolacton CAS [2549-57-7]) dar. Es sind bisher keine Polyester-Polysiloxan-Blockcopolymere mit Trimethylcaprolacton bekannt. Dies ist dadurch erklärbar, dass sich mit den bisher bekannten Methoden keine Polyester-Polysiloxan-Blockcopolymere mit Trimethylcaprolacton in hohen Ausbeuten herstellen lassen.

Die Herstellung von Polyester-Polysiloxan-Blockcopolymeren mit mehrfach substituierten Lactonen wie Trimethylcaprolacton wäre aber wünschenswert, um zu Produkten mit neuen Eigenschaften und Kompatibilitäten zu gelangen.

Eine Aufgabe der vorliegenden Erfindung bestand daher darin, neuartige, polyestermodifizierte Siloxane zu synthetisieren sowie ein Verfahren zu deren Herstellung bereitzustellen, sowie deren Verwendung.

Gelöst wird die Aufgabe durch die Umsetzung von mehrfach substituierten Lactonen, bevorzugt Trimethylcaprolacton, mit Siloxanen.

Gegenstand der Erfindung sind Polyester-Polysiloxan-Blockcopolymere, die mehrfach substituierte Lacton-Monomereinheiten aufweisen. Die Substitution besteht bevorzugt aus Alkylgruppen, besonders bevorzugt aus Methylgruppen und insbesondere ist die Lactonmonomereinheit eine Trimethylcaprolactongruppe.

Ein weiterer Gegenstand der Erfindung ist ein Verfahren zur Herstellung der erfindungsgemäßen Polyester-Polysiloxan-Blockcopolymeren unter Verwendung von mehrfach substituierten Lactonen.

Ein weiterer Gegenstand der Erfindung ist die Verwendung von Polyester-Polysiloxan-Blockcopolymeren, die mehrfach substituierte Lacton-Monomereinheiten aufweisen, und dadurch die Bereitstellung von neuen Anwendungseigenschaften und Kompatibilitäten.

Zudem sollen in der Synthese der Produkte so hohe Umsätze (>60%, bevorzugt >70%, insbesondere >85%) an den eingesetzten Lactonen erreicht werden, dass nicht umgesetztes Lacton am Ende der Reaktion möglichst nicht abdestilliert werden muss. Des Weiteren soll die Reaktion eine hohe Selektivität (>70%, bevorzugt >80%, insbesondere >90%) bzgl. des zu bildenden Polyester-Polysiloxan-Blockcopolymers aufweisen. Zum Beispiel soll die Bildung von

Homopolymer (basierend auf dem Lacton) unterdrückt werden, da dieses die Eigenschaften des Polyester-Polysiloxan-Blockcopolymers beeinflussen kann. Dafür ist es wünschenswert, die Reaktion bei möglichst milden Bedingungen, d.h. bei Temperaturen von höchstens 110 °C, bevorzugt ≤100 °C, insbesondere ≤90 °C, durchzuführen.

Beschreibung der Erfindung:

Überraschenderweise wurde ein Zugang zu neuartigen Polyester-Polysiloxan-Blockcopolymeren gefunden, die mehrfach substituierte Lactone als Monomereinheiten enthalten. Bevorzugt sind dabei Polyester-Polysiloxan-Blockcopolymere der allgemeinen Formel (I). Diese zeigen im Vergleich zu den bekannten Polyester-Polysiloxan-Blockcopolymeren einzigartige Eigenschaften. Z.B. besitzen sie eine geringe Kristallisationsneigung, so dass die Produkte völlig amorph sind oder sich durch einen vergleichsweise niedrigen Schmelzpunkt bzw. -bereich (<50 °C) auszeichnen. Zudem weisen sie eine verbesserte Kompatibilität mit beispielsweise kosmetischen Ölen auf, d.h. dass sie darin in Mengen von mindestens 0,2% klar und homogen löslich sind.

Ein weiterer Gegenstand der Erfindung ist ein Verfahren zur Herstellung von Polyester-Polysiloxan-Blockcopolymeren mit mehrfach substituierten Lacton-Monomereinheiten. Dabei werden OH-, NRH- oder COOH-funktionelle Siloxane mit mehrfach substituierten Lactonen wie Trimethylcaprolacton sowie gegebenenfalls weiterer unsubstituierter Lactone wie ε-Caprolacton und Bismuth(III)triflat oder Methylaluminoxan (MAO) als Katalysator umgesetzt.

Ein weiterer Gegenstand ist die Verwendung von Polyester-Polysiloxan-Blockcopolymeren der allgemeinen Formel (I) in reinigenden und pflegenden Formulierungen, als Kunststoff- und Lackadditive, sowie in Formulierungen im Agrarbereich.

Ein Gegenstand der Erfindung sind polyestermodifizierte Siloxane, die mindestens drei mehrfach substituierte Lacton-Monomereinheiten und gegebenenfalls weitere nichtsubstituierte oder einfach substituierte Lacton-Monomereinheiten enthalten. In einer weiteren Ausgestaltung der Erfindung können die mehrfach substituierten Lactonmonomereinheiten, die zur Herstellung der Produkte eingesetzt werden, unabhängig voneinander gleich oder verschieden sein und werden mit der allgemeinen Formel (0) beschrieben:

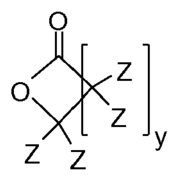

Formel (0)

mit

Z = unabhängig voneinander gleiche oder verschiedene lineare oder verzweigte Alkylreste mit 1 bis 6 Kohlenstoffatomen oder Wasserstoff, bevorzugt Methyl oder Wasserstoff und

y = 1 bis 5, bevorzugt 2 bis 4, insbesondere 4,

mit der Maßgabe, dass
zumindest zwei der Reste Z in Formel (0) Alkylreste und kein Wasserstoff sind, und mit der Maßgabe, dass der Lactonblock über SiC-Verknüpfung an das Siloxangerüst gebunden ist.

Ein bevorzugter Gegenstand der Erfindung sind polyestermodifizierte Siloxane der allgemeinen Formel (I)

$$\mathbf{M_{2+f+2g-a-b}\ M'_a\ M''_b\ D_c\ D'_d\ D''_e\ T_f\ Q_g} \qquad \text{Formel (I)}$$

mit

M = $(R^1_3SiO_{1/2})$,

M' = $(R^1_2R^2SiO_{1/2})$,

M" = $(R^1_2R^3SiO_{1/2})$,

D = $(R^1_2SiO_{2/2})$,

D' = $(R^1R^2SiO_{2/2})$,

D" = $(R^1R^3SiO_{2/2})$,

T = $(R^1SiO_{3/2})$ und

Q = $(SiO_{4/2})$;

mit

a = 0 bis 10, bevorzugt 0 bis 2, insbesondere 0,

b = 0 bis 15, bevorzugt 0 bis 10, insbesondere 0, 2 bis 9,

c = 0 bis 350, bevorzugt 5 bis 250, insbesondere 10 bis 150,

d = 0 bis 50, bevorzugt 0 bis 20, insbesondere 0 oder 2 bis 10,

e = 0 bis 100, bevorzugt 0 bis 50, insbesondere 0 oder 3 bis 30,

f = 0 bis 12, bevorzugt 0 bis 8, insbesondere 0 oder 1 bis 7 und

g = 0 bis 8, bevorzugt 0 bis 5, insbesondere 0 oder 1 bis 4,

mit der Maßgabe, dass

$$b + e \geq 1$$

ist;
wobei
**R¹** = unabhängig voneinander gleiche oder verschiedene lineare oder verzweigte, gegebenenfalls aromatische Kohlenwasserstoffreste mit 1 bis 30 Kohlenstoffatomen, die gegebenenfalls Hydroxyl- oder Esterfunktionen tragen, bevorzugt Methyl oder Phenyl, insbesondere Methyl,
**R²** = unabhängig voneinander gleiche oder verschiedene Polyetherreste, oder solche Reste der Formel (II)

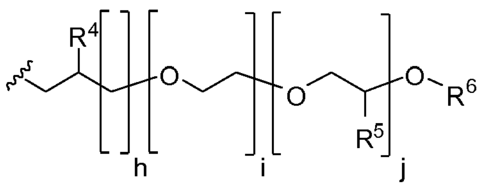

Formel (II)

und
**R³** = unabhängig voneinander gleiche oder verschiedene Reste der allgemeinen Formeln (IIIa) oder (IIIb)

**-A (BC)k** Formel (IIIa),

**-A (B'C')k** Formel (IIIb),

wobei
**C** = unabhängig voneinander gleiche oder verschiedene Polyesterreste der Formel (IV)

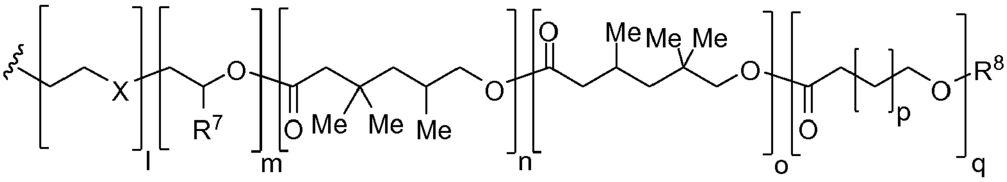

Formel (IV),

**B** = unabhängig voneinander gleiche oder verschiedene zweibindige Heteroatom-Gruppen, bevorzugt ein Rest der Gruppe

-O-, -NH-, $-NR^{14}-$,

**A** = unabhängig voneinander gleich oder verschieden ein (k+1)-bindiger organischer Rest, bevorzugt ein Rest der Gruppe: $-CH_2-CHR^9-(CH_2)_r-$,

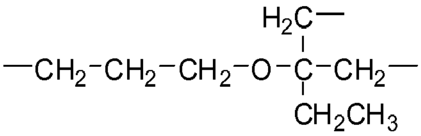

,

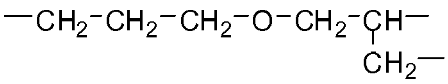

,

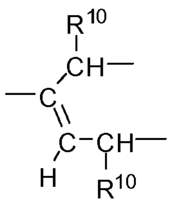

,

**C'** = unabhängig voneinander gleiche oder verschiedene Polyesterreste der Formel (V)

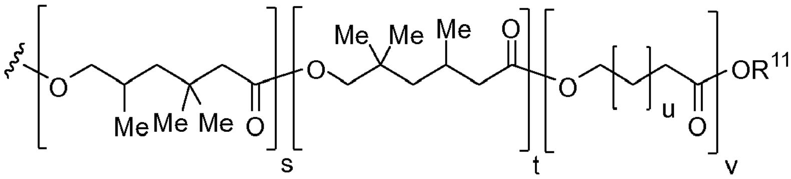

Formel (V),

**B'** = unabhängig voneinander gleiche oder verschiedene zweibindige carbonylgruppenhaltige Reste, bevorzugt ein Rest der Gruppe:

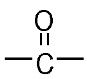

,

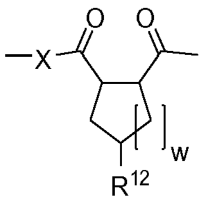
,

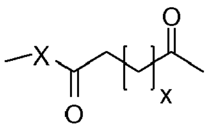
,

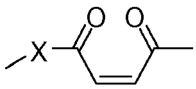
,

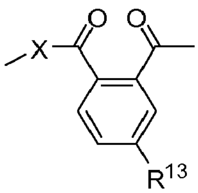
,

sind,
mit
X = unabhängig voneinander gleich oder verschieden O oder NH, bevorzugt Sauerstoff O,
$R^4$, $R^9$ = unabhängig voneinander gleiche oder verschiedene lineare oder verzweigte Alkylreste mit 1 bis 16 Kohlenstoffatomen oder Wasserstoff, bevorzugt Methyl oder Wasserstoff, insbesondere Wasserstoff,
$R^5$, $R^7$ = unabhängig voneinander gleiche oder verschiedene Alkyl- oder Arylreste, bevorzugt Methyl, Ethyl oder Phenyl, insbesondere Methyl,
$R^6$ = unabhängig voneinander gleiche oder verschiedene, gegebenenfalls verzweigte Alkylreste oder ein Acylrest, bevorzugt Methyl oder Acetyl,
$R^8$, $R^{10}$, $R^{11}$, $R^{12}$, $R^{13}$ = unabhängig voneinander gleiche oder verschiedene lineare oder verzweigte Alkylreste mit 1 bis 16 Kohlenstoffatomen oder Wasserstoff, bevorzugt Methyl oder Wasserstoff, insbesondere Wasserstoff, und
$R^{14}$ = unabhängig voneinander gleiche oder verschiedene lineare oder verzweigte Alkylreste mit 1 bis 16 Kohlenstoffatomen, insbesondere Methyl;
sowie
h = 0 bis 22, bevorzugt 0 bis 9, insbesondere 1,
i = 0 bis 50, bevorzugt 0 bis 30, insbesondere 5 bis 25,
j = 0 bis 50, bevorzugt 0 bis 30, insbesondere 0 bis 25,
k = 1 bis 3, bevorzugt 1 bis 2, insbesondere 1,
l = 0 bis 50, bevorzugt 0 bis 30, insbesondere 0 oder 4 bis 15,
m = 0 bis 50, bevorzugt 0 bis 30, insbesondere 0,
n, o, s, t = 0 bis 50, bevorzugt 1 bis 30, insbesondere 2 bis 20,
p, u = 1 bis 4, bevorzugt 2 bis 3, insbesondere 3,
q, v = 0 bis 50, bevorzugt 0 bis 30, insbesondere 2 bis 20,
r = 0 bis 22, bevorzugt 1 bis 9, insbesondere 1 oder 4,
w = 1 bis 5, bevorzugt 1 bis 3, insbesondere 2 und
x = 1 bis 4, bevorzugt 1 bis 3, insbesondere 1 bis 2,
ist,
mit der Maßgabe, dass $n + o \geq 2$ oder $s + t \geq 2$ ist.

Bevorzugt sind f+g ≥1, insbesondere ≥2, und b ≥3.
Weiterhin bevorzugt sind Polyester-Polysiloxan-Blockcopolymere der Formel (I) mit d≥2 oder solche Polyester-Polysiloxan-Blockcopolymere mit X=O und l≥3.

Bevorzugte erfindungsgemäße Polyester-Polysiloxan-Blockcopolymere zeichnen sich dadurch aus, dass

- sie ein Gemisch der beiden strukturisomeren Trimethylcaprolacton-Einheiten beinhalten,
- das Trimethylcaprolacton in racemischer aber auch enantiomerenreinen Form eingesetzt werden kann oder deren beliebigen Mischungen und
- im Polyestersegment des Produkts der Massenanteil an Trimethylcaprolacton ≥50% beträgt, d.h. (n+o)/q bzw. (s+t)/v≥1 ist.

**Herstellung:**

Ein weiterer Gegenstand der Erfindung ist ein Verfahren zur Umsetzung von OH-, NRH-oder COOH-funktionellen Silicon-Makroinitiatoren mit Trimethylcaprolacton sowie gegebenenfalls weiteren Lactonen zu Polyester-Polysiloxan-Blockcopolymeren der Formel (I) mit Hilfe der Katalysatoren Bismuth(III)-triflat oder Methylaluminoxan (MAO).

Die zur Umsetzung mit den Lactonen benötigten OH-, NRH- oder COOH-funktionellen Silicon-Makroinitiatoren können durch Hydrosilylierung von SiH-funktionellen Siloxanen mit entsprechenden OH-, NRH- oder COOH-funktionellen Alkenen oder Alkinen hergestellt werden. Des Weiteren sind die durch den Fachmann bekannten Verfahren wie Veresterungs- oder Verseifungsreaktionen aus geeigneten organomodifizierten Siloxanen herstellbar.

Die zur Hydrosilylierung eingesetzten SiH-funktionellen Siloxane sind durch die dem Fachmann bekannten Verfahren der Equilibrierung, wie zum Beispiel in US 7,196,153 beschrieben, erhältlich. Verzweigte Siloxane zur Synthese der Produkte aus Formel (I) mit f + g ≥1 sind speziell nach dem in den Patentanmeldungen DE 10 2008 041601.0 und DE 10 2007 055485.2 beschriebenen Verfahren zugänglich.

Die Hydrosilylierung mit funktionellen Olefinen bzw. Alkinen kann nach etablierten Methoden in Gegenwart eines Katalysators durchgeführt werden. Geeignete Verfahren zur Hydrosilylierung werden zum Beispiel im Buch "Chemie und Technologie der Silikone", Verlag Chemie, 1960, Seite 43, sowie in US 3,775,452 und EP 1520870 beschrieben, auf welche ausdrücklich verwiesen wird.

Als Olefine zur Hydrosilylierung können beispielsweise 1-Hexenol, Allyloxyethanol, Glycerinmonoallylether, Trimethylolpropanmonoallylether, Allylalkohol, Undecylenol, Allylamin, N-Allylethylendiamin, Undecylensäure, Undecylensäuremethylester, Undecylensäuretrimethylsilylester, Acrylsäurealkylester, Methacrylsäurealkylester, Allylpolyether oder Vinylpolyether eingesetzt werden. Alkine zur Hydrosilylierung können beispielsweise But-2-in-1,4-diol oder 1,4-Dimethyl-but-2-in-1,4-diol sein.

Gegebenenfalls können die in der Hydrosilylierung hergestellten OH-, NHR- oder COOR-funktionellen Siloxane noch weiter umgesetzt werden, bevor der Polyesteraufbau erfolgt. Die OH- oder NHR-funktionellen Siloxane können beispielsweise mit cyclischen Säureanhydriden zu COOH-funktionellen Verbindungen umgesetzt werden. Als Säureanhydride eignen sich z.B. Maleinsäureanhydrid, Bernsteinsäureanhydrid, Methylhexahydrophthalsäureanhydrid oder Phthalsäureanhydrid.
Die COOR-funktionellen Siloxane können beispielsweise durch Verseifung zu COOH-funktionellen Makroinitiatoren umgesetzt werden.

Die Umsetzung der OH-, NHR- oder COOH-funktionellen Siloxane mit Trimethylcaprolacton und gegebenenfalls weiteren Lactonen geschieht in Gegenwart eines Katalysators.

Es eignen sich Katalysatoren, die im Stand der Technik beschrieben sind. Beispielsweise wird Zinn(II)octoat sehr häufig eingesetzt. Zinnverbindungen sind jedoch aus (umwelt)-toxikologischen Gesichtspunkten zukünftig nicht mehr erwünscht. Zudem sind verhältnismäßig hohe Temperaturen für die Umsetzung notwendig. Üblicherweise werden Temperaturen von 110-160 °C gewählt.

Überraschenderweise hat sich gezeigt, dass sich die erfindungsgemäßen Produkte mit Bismuth(III)-triflat bzw. Methylaluminoxan (MAO) als Katalysatoren in guten Ausbeuten (d.h. Lacton-Umsätzen von >70%) und unter milden Bedingungen (<100 °C) herstellen lassen. Besonders vorteilhaft erfolgt die Synthese daher in Gegenwart dieser Katalysatoren bei Temperaturen von ca. 80 °C in ca. 8-24 h.

Bei dem erfindungsgemäßen Verfahren werden die Edukte mit dem Katalysator gemischt und auf Reaktionstemperatur gebracht. Eventuell kann es sinnvoll sein, den Katalysator zunächst mit einem Edukt zu mischen und erst dann die folgenden Edukte zuzusetzen. Eventuell ist es sinnvoll, die Temperatur während der Reaktion zu verändern und ein Temperaturprofil zu durchlaufen. Zudem kann es sinnvoll sein, die verwendeten Edukte mit einer dem Fachmann bekannten Methode vorzubehandeln, wie beispielsweise einer Vortrocknung. Eventuell kann es weiterhin sinnvoll sein, einzelne Edukte nach und nach zuzudosieren. Die Umsetzung kann kontinuierlich, diskontinuierlich oder halbkontinuierlich durchgeführt werden.

Bismuth(III)-triflat ist bereits bei niedrigen Temperaturen, d.h. bei Raumtemperatur bis 100 °C, katalytisch aktiv.

Zudem sind nur geringe Mengen an Bismuth(III)-triflat als Katalysator notwendig, um zu guten Ausbeuten der erfindungsgemäßen Produkte zu gelangen. Es genügen bereits 0,01-0,05 mol% Katalysator bezogen auf das eingesetzte Lacton bzw. das Lactongemisch, um in technisch akzeptablen Reaktionszeiten die Edukte umzusetzen. Für den Fachmann überraschend ist, dass Bismuth(III)-triflat nicht die Equilibrierung des Siloxangerüstes bewirkt.

Das Bismuth(III)-triflat lässt sich mit einfachen Methoden am Ende der Reaktion desaktivieren. Beispielsweise können Komplexierungsreagenzien zugesetzt oder das Bismuth(III)-triflat durch Zugabe von Fällungsreagenzien aus dem Reaktionsgemisch entfernt werden. Geeignete Fällungsreagenzien sind z.B. Thioharnstoff, Dithiouracil oder Ethylthiooxamat.

Auch Methylaluminoxan (MAO) ist als Katalysator im Sinne der Erfindung besonders geeignet. Insbesondere eignet sich MAO, um Produkte herzustellen, deren Polyestersegment ausschließlich aus Trimethylcaprolacton-Einheiten besteht und gleichzeitig hohe Umsätze an Lacton (>70%) aufweist. Auch MAO ist bereits bei milden Bedingungen katalytisch aktiv (80-90 °C). Überraschenderweise insertiert MAO nicht in das Siloxangerüst. Zudem bewirkt MAO überraschenderweise keine Equilibrierung des Siloxangerüstes.

**Anwendung:**

Ein weiterer Gegenstand der Erfindung ist die Verwendung der erfindungsgemäßen Polyester-Polysiloxan-Blockcopolymere in reinigenden und pflegenden Formulierungen, als Kunststoff- und Lackadditive und in Formulierungen für den Agrarbereich.

Im Vergleich zu Polyester-Polysiloxan-Blockcopolymere auf Basis von einfachen Lactonen wie ε-Caprolacton oder δ-Valerolacton aus dem Stand der Technik, weisen die erfindungsgemäßen Produkte eine erhöhte Kompatibilität in vielen Anwendungssystemen auf. Sie können daher sehr nützliche Additivfunktionen wie härtende, glanzverbessernde oder andere oberflächenmodifizierende Eigenschaften in diesen Anwendungen erfüllen.

**Verwendung in reinigenden und pflegenden Formulierungen:**

Reinigende und pflegende Formulierungen werden beispielsweise in der Kosmetik, für pharmazeutische Anwendungen und bei Anwendungen für den Home Care Bereich verwendet. Dabei werden zumeist Wasser-in-Öl- oder Öl-in-Wasser-Emulsionen eingesetzt. Additive wie Silicone können in diesen Formulierungen unterschiedliche Aufgaben einnehmen, beispielsweise dienen sie als Emulgatoren oder als Additive zur Verbesserung des Hautgefühls.
In Ölen wie kosmetischen Ölen (Emollients) können Siliconadditive zur Erniedrigung der Oberflächenspannung, zur besseren Verteilbarkeit (Spreitung) und zu verbessertem Hautgefühl beitragen. Die Kompatibilität des Silicons mit dem kosmetischen Öl ist dabei sehr wichtig.

Die erfindungsgemäßen Produkte können im Vergleich zu einfachen Polyester-Polysiloxan-Blockcopolymeren auf Basis von z.B. ε-Caprolacton überraschenderweise sehr viel einfacher und homogen in viele Formulierungen eingearbeitet werden. Sie können dann in der Anwendung beispielsweise verbessertes Hautgefühl, verbesserte Spreitung, erhöhte Emulsionsstabilität und erhöhte Stabilisierung von Pigmenten oder UV-Absorbern bewirken.

Ein weiterer Gegenstand der Erfindung ist daher die Verwendung der erfindungsgemäßen Polyester-Polysiloxan-Blockcopolymere zur Herstellung von kosmetischen, dermatologischen oder pharmazeutischen Formulierungen sowie zur Herstellung gegebenenfalls dispergierte Feststoffe enthaltender Pflege- und Reinigungsmittel für Haushalt oder Industrie, insbesondere für harte Oberflächen, Leder oder Textilien.

Die mit Hilfe der erfindungsgemäßen Polyester-Polysiloxan-Blockcopolymere hergestellten kosmetischen, dermatologischen oder pharmazeutischen Zusammensetzungen und Formulierungen sowie die gegebenenfalls dispergierte Feststoffe enthaltenden Pflege- und Reinigungsmittel für Haushalt oder Industrie und die Pflege- und Reinigungsmittel für harte Oberflächen, Leder oder Textilien, enthaltend mindestens ein erfindungsgemäßes Polyester-Polysiloxan-Blockcopolymer, sind ebenfalls Gegenstand der Erfindung.

Ein weiterer Gegenstand der Erfindung ist auch die Verwendung der die erfindungsgemäßen Polyester-Polysiloxan-Blockcopolymere enthaltenden Zusammensetzungen zur Herstellung von Formulierungen für den Agrobereich oder als Additive in Lacken oder Kunststoffen.

Die erfindungsgemäßen Formulierungen können z.B. mindestens eine zusätzliche Komponente enthalten, ausgewählt aus der Gruppe der Emollients, Co-Emulgatoren und Tenside, Verdicker / Viskositätsregler / Stabilisatoren, UV-Lichtschutzfilter, Antioxidantien, Hydrotrope (oder Polyole), Fest- und Füllstoffe, Filmbildner, Perlglanzadditive, Deodorant-und Antitranspirantwirkstoffe, Insektrepellentien, Selbstbräuner, Konservierungsstoffe, Konditioniermittel, Parfüme, Farbstoffe, kosmetische Wirkstoffe, Pflegeadditive, Überfettungsmittel, Lösungsmittel.

Substanzen, die als beispielhafte Vertreter der einzelnen Gruppen eingesetzt werden können, sind dem Fachmann bekannt und können beispielsweise der deutschen Anmeldung DE 10 2008 001788.4 entnommen werden. Diese Patentanmeldung wird hiermit als Referenz eingeführt und gilt somit als Teil der Offenbarung.

Bevorzugt ist die Verwendung erfindungsgemäßer Polyester-Polysiloxan-Blockcopolymere zur Herstellung

kosmetischer oder pharmazeutischer Formulierungen. Solche Formulierungen können beispielsweise Cremes, Lotionen oder Sprays, wie etwa Pflegecremes, Babycremes oder Sonnenschutzlotionen, Salben, Antiperspirantien, Deodorantien oder Schminken sein. Insbesondere kann es sich bei den kosmetischen Formulierungen auch um Formulierungen wie Make-Ups oder Sonnenschutzprodukte handeln, die dispergierte Feststoffe wie beispielsweise Eisenoxidpigmente, Titandioxid oder Zinkoxidpartikel enthalten.

Erfindungsgemäße Formulierungen können daher Verwendung als ein Hautpflege-, Gesichtspflege-, Kopfpflege-, Körperpflege-, Intimpflege-, Fußpflege-, Haarpflege-, Nagelpflege-, Zahnpflege- oder Mundpflegeprodukt finden.

Erfindungsgemäße Formulierungen können Verwendung in Form einer Emulsion, einer Suspension, einer Lösung, einer Creme, einer Salbe, einer Paste, eines Gels, eines Öls, eines Puders, eines Aerosols, eines Stiftes, eines Sprays, eines Reinigungsproduktes, eines Schmink- oder Sonnenschutzpräparates oder eines Gesichtswassers finden.

Weitere Gegenstände der Erfindung ergeben sich aus den Ansprüchen, deren Offenbarungsgehalt vollumfänglich Gegenstand der Beschreibung dieser Erfindung ist.

Die erfindungsgemäßen polyestermodifizierten Siloxane werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt vollständig zum Offenbarungsgehalt der vorliegenden Erfindung gehören. Werden im Rahmen der vorliegenden Erfindung Verbindungen, wie z.B. organomodifizierte Polysiloxane, beschrieben, die verschiedene Einheiten mehrfach aufweisen können, so können diese statistisch verteilt (statistisches Oligomer) oder geordnet (Blockoligomer) in diesen Verbindungen vorkommen. Angaben zu der Anzahl von Einheiten in solchen Verbindungen sind als Mittelwert, gemittelt über alle entsprechenden Verbindungen, zu verstehen. Prozentzahlen (%) sind, sofern nicht anders angegeben, Massenprozente.

In den nachfolgend aufgeführten Beispielen wird die vorliegende Erfindung beispielhaft beschrieben, ohne dass die Erfindung und deren Anwendungsbreite auf die in den Beispielen genannten Ausführungsformen beschränkt sein sollen.

Beispiele:

## Verwendete Chemikalien:

### Siloxan-Macroinitiatoren:

**Siloxan A: $\alpha,\omega$-OH-funktionelles Siloxan N=30:**

Hergestellt nach etablierten Methoden (siehe beispielsweise EP 1 520 870) durch Pt-katalysierte Hydrosilylierung eines $\alpha,\omega$-SiH-Siloxans (Siloxankettenlänge N=30) mit 1-Hexenol und anschließender Vakuumdestillation.
Hydroxy-Zahl (OHZ) des Produkts: 47,6 mg KOH/g.

**Siloxan B: $\alpha,\omega$-OH-funktionelles Siloxan N=80:**

Hergestellt nach etablierten Methoden durch Pt-katalysierte Hydrosilylierung eines $\alpha,\omega$-SiH-Siloxans (Siloxankettenlänge N=80) mit 1-Hexenol und anschließender Vakuumdestillation.
OHZ: 19,2 mg KOH/g.

**Siloxan C: $\alpha,\omega$- und kammständig-OH-funktionelles Siloxan:**

Hergestellt nach etablierten Methoden durch Pt-katalysierte Hydrosilylierung eines SiH-Siloxans der Formel $Me_2HSiO-(Me_2SiO)_{13}-(MeHSiO)_5-SiHMe_2$ mit 1-Hexenol und anschließender Vakuumdestillation.
OHZ: 187,0 mg KOH/g.

**Siloxan D: kammständig Polyether-funktionelles Siloxan:**

Hergestellt nach etablierten Methoden durch Pt-katalysierte Hydrosilylierung eines SiH-Siloxans der Formel $Me_3SiO-(Me_2SiO)_{13}-(MeHSiO)_5-SiMe_3$ mit 1,3 Äquivalenten eines Allylpolyethers der Formel $H_2C=CH-CH_2-(OCH_2CH_2)_{13}-OH$.
OHZ: 89,0 mg KOH/g.

**Siloxan E: α,ω-$NH_2$-funktionelles Siloxan N=30:**

Hergestellt nach etablierten Methoden durch Tetramethylammoniumhydroxid-katalysierte Equilibrierung von 1,3-Bis(3-aminopropyl)-1,1,3,3-tetramethyl-disiloxan (CAS [2469-55-8], ABCR) mit Octamethylcyclotetrasiloxan (D4, ABCR).
Stickstoff-Gehalt des Produkts: 1,3%.

**Siloxan F: α,ω-COOH-funktionelles Siloxan N=30:**

Hergestellt nach etablierten Methoden aus Siloxan A durch Umsetzung mit 4-Methylhexahydrophthalsäureanhydrid.
Säurezahl (SZ): 43 mg KOH/g.
Die Siloxan-Macroinitiatoren A-F werden jeweils nach Einwaage in das Reaktionsgefäß ca. 30 Minuten bei $5\cdot10^{-2}$ mbar im Ölpumpenvakuum von produktionsbedingten, flüchtigen Bestandteilen (u.a. Wasser) befreit.

**Weitere Reagenzien:**

**3,5,5-Trimethylcaprolacton / 3,3,5-Trimethylcaprolacton** (=TMCL, CAS [2549-56-6] und [2549-57-7], Evonik Degussa GmbH) und ε-Caprolacton (=eCL, Acros): 24 h über $CaH_2$ gerührt, dann abdestilliert und unter Argon gelagert.
Bismuth(III)trifluoromethansulfonat 99% (Aldrich), CAS [88189-03-1]
**Zinn(II)octoat** 95% (Aldrich), CAS [301-10-0]
**Methylaluminoxan** 10 Gew.% in Toluol (=MAO, Aldrich), CAS [120144-90-3], d = 0,875 g/$cm^3$
**Thioharnstoff** 99% (Aldrich), CAS [62-56-6]
**Dithiouracil** 98% (Aldrich), CAS [2001-93-6]
**Ethylthiooxamat** 95% (Aldrich), CAS [16982-21-19]
Dithizon 99% (Aldrich), CAS [60-10-6]

**Analytik:**

**500 MHz $^1$H-NMR**-Spektren, **125 MHz $^{13}$C-NMR-** sowie **79,5 MHZ $^{29}$Si-NMR**-Spektren wurden mit einem Bruker Avance DRX 500 aufgenommen. Die Referenzierung der ppm-Skala erfolgte dabei mit Hilfe des Lösungsmittelsignals des $CDCl_3$ bei 7,24 ppm und 77,0 ppm bzw. durch Zugabe von TMS (0 ppm) bei der Aufnahme von $^{29}$Si-NMR-Spektren.
**DSC-Messungen** wurden mit einem Mettler DSC-822 Instrument in einem Temperaturbereich von -50 bis 200 °C bei einer Heizrate von 10 °C/min durchgeführt. Zur Kalibrierung wurden Zinn-, Indium- und Zink-Standards verwendet.
**GPC-Messungen** wurden bei Verwendung von THF (HPLC Grade, unstabilisiert, Biosolv) als Laufmittel bei Raumtemperatur mit einer Flussrate von 1 ml/min an einem System bestehend aus einer Pumpe der Firma FLOW, Modell Intelligent Pump AL-12, und einem Probensammler der Firma Schambeck SFD, Modell S5200, durchgeführt. Dabei wurde eine Vorsäule der Porosität 100 Å sowie drei Hauptsäulen "Gel Sdplus" der Firma MZ Analysentechnik GmbH verwendet, welche Porositäten von 10.000, 1000 und 100 Å aufweisen und aus einem Styrol-Divinylbenzol-Copolymer bestehen. Vorgeschaltet ist ein Degasser der Firma Schambeck, Typ Gastorr 150. Als Detektoren dienten ein Waters 486 Turnable Absorbance Detector und ein Schambeck SFD RI2000 Differential Refraktometer. Die Kalibrierung erfolgte mit Polystyrol-Standards im Bereich von 570 bis 3.114.000 Dalton. Als interner Standard wurde Toluol zugesetzt.

**Beispiel 1:**

**Herstellung eines Polyester(PES)-Polydimethylsiloxan(PDMS)-Polyester(PES)-Triblockpolymers [PES-b-PDMS-b-PES] mittels Ring-Opening-Polymerisation (ROP) von eCL/TMCL (20 mol/OH - 50/50) gestartet auf einem hydroxyalkylfunktionalisierten Siloxan (Siloxan A) unter Zinnkatalyse**

In einem 500 mL Vierhalskolben, ausgestattet mit Rückflusskühler, KPG-Rührer, Innenthermometer und Argoneinleitung, werden unter inerten Bedingungen 75,0 g (32,2 mmol) Siloxan A (OHZ 47,6 mg/g), 73,5 g (643,9 mmol) ε-Caprolacton und 100,6 g (643,9 mmol) Trimethylcaprolacton (Isomerengemisch) verrührt. Die so hergestellte Reaktionsmischung wird auf 150 °C geheizt, sodann 1,3 g (3,2 mmol) Zinn(II)octoat (0,25 mol% bez. auf Lacton bzw. 0,5 Gew% ad Gesamtansatz) hinzugegeben und weitere 8 Stunden bei 150 °C gerührt. Nach beendeter Reaktion wird bei 80 °C im Ölpumpenvakuum ($5\cdot10^{-2}$ mbar) von sämtlichen flüchtigen Bestandteilen befreit. Es wird ein viskoses, leicht gelbliches Polymer erhalten. Die Molmassenverteilung beträgt laut GPC (THF): Mw = 10.734 g/mol und Mn = 7.272 g/mol. DSC-Analysen im Temperaturbereich von -50 bis 200 °C zeigen ein vollkommen amorphes Verhalten des Poly-

mers. Die $^{1}H/^{13}C/^{29}Si$-NMR Spektren entsprechen den Erwartungen.

**Beispiel 2:**

**Herstellung eines [PES-b-PDMS-b-PES] Triblockpolymers mittels ROP von eCL/TMCL (20 mol/OH - 60/40) gestartet auf einem hydroxyalkylfunktionalisierten Siloxan (Siloxan A) unter Zinnkatalyse wie in Beispiel 1 beschrieben**

77,6 g (32,9 mmol) Siloxan A (OHZ 47,6 mg/g)

90,2 g (790,3 mmol) ε-Caprolacton

82,3 g (526,8 mmol) Trimethylcaprolacton (Isomerengemisch)

1,3 g (3,2 mmol) Zinn(II)octoat [0,5 Gew% ad Gesamtansatz]

Die Molmassenverteilung beträgt laut GPC (THF): Mw = 11.932 g/mol und Mn = 9.214 g/mol.

DSC-Analysen im Temperaturbereich von -50 bis 200 °C zeigen ein vollkommen amorphes Verhalten des Polymers.

Die $^{1}H/^{13}C/^{29}Si$-NMR Spektren entsprechen den Erwartungen.

**Beispiel 3:**

**Herstellung eines [PES-b-PDMS-b-PES] Triblockpolymers mittels ROP von eCL/TMCL (20 mol/OH - 70/30) gestartet auf einem hydroxyalkylfunktionalisierten Siloxan (Siloxan A) unter** Zinnkatalyse wie in Beispiel 1 beschrieben

79,3 g (33,7 mmol) Siloxan A (OHZ 47,6 mg/g)

107,6 g (942,7 mmol) ε-Caprolacton

63,1 g (403,9 mmol) Trimethylcaprolacton (Isomerengemisch)

1,3 g (3,2 mmol) Zinn(II)octoat [0,5 Gew% ad Gesamtansatz]

Die Molmassenverteilung beträgt laut GPC (THF): Mw = 12.344 g/mol und Mn = 9.014 g/mol.

DSC-Analysen im Temperaturbereich von -50 bis 200 °C zeigen ein teilkristallines Verhalten des Polymers mit einem Schmelzbereich von 7-35 °C, einem Peakmaximum bei 29 °C und einer Schmelzenthalpie von 36 J/g.

Die $^{1}H/^{13}C/^{29}Si$-NMR Spektren entsprechen den Erwartungen.

**Beispiel 4:**

**Herstellung eines [PES-b-PDMS-b-PES] Triblockpolymers mittels ROP von eCL/TMCL (20 mol/OH - 50/50) gestartet auf einem hydroxyalkylfunktionalisierten Siloxan (Siloxan A) unter Bismuthkatalyse**

In einem 500 mL Vierhalskolben, ausgestattet mit Rückflusskühler, KPG-Rührer, Innenthermometer und Argoneinleitung, werden unter inerten Bedingungen 75,0 g (32,2 mmol) Siloxan A (OHZ 47,6 mg/g) vorgelegt und 422,6 mg (0,64 mmol) des Bi-Katalysators (0,05 mol% bez. auf Lacton) hinzugegeben. Es wird dabei so lange bei 80 °C gerührt, bis der Katalysator vollständig gelöst ist. Danach wird eine Mischung aus 73,5 g (643,9 mmol) ε-Caprolacton und 100,6 g (644,0 mmol) Trimethylcaprolacton (Isomerengemisch) hinzugegeben und weitere 8 Stunden bei 80 °C gerührt. * Nach beendeter Reaktion wird bei 80 °C im Ölpumpenvakuum ($5 \cdot 10^{-2}$ mbar) von sämtlichen flüchtigen Bestandteilen befreit. Es wird ein viskoses, leicht trübes Polymer erhalten. Die Molmassenverteilung beträgt laut GPC (THF): Mw = 7.005 g/mol und Mn = 4.596 g/mol. DSC-Analysen im Temperaturbereich von -50 bis 200 °C zeigen ein vollkommen amorphes Verhalten des Polymers. Die $^{1}H/^{13}C/^{29}Si$-NMR Spektren entsprechen den Erwartungen.

* Mögliche Desaktivierung des Katalysators:

Desaktivierung mittels Fällungsreagenz:

Nach beendeter Reaktion werden ca. 97,4 mg (1,3 mmol) Thioharnstoff (doppelter Überschuss bez. auf Katalysator) hinzugegeben und weitere 3 Stunden nachgerührt. Man lässt die Reaktionsmischung abkühlen, nimmt in 250 mL Chloroform auf und filtriert mehrfach, bis das Filtrat klar ist. Sodann wird das Lösungsmittel am Rotationsverdampfer abgezogen und bei 80 °C und $5 \cdot 10^{-2}$ mbar im Ölpumpenvakuum von weiteren flüchtigen Bestandteilen befreit. Es wird ein viskoses, leicht gelblich-trübes Polymer erhalten. Die Molmassenverteilung beträgt laut GPC (THF): Mw = 7.106 g/mol und Mn = 4.498 g/mol.

**Beispiel 5:**

**Herstellung eines [PES-b-PDMS-b-PES] Triblockpolymers mittels ROP von eCL/TMCL (20 mol/OH - 50/50) gestartet auf einem hydroxyalkylfunktionalisierten Siloxan (Siloxan A) unter Methylaluminoxankatalyse (MAO)**

In einem 1 L Vierhalskolben, ausgestattet mit Rückflusskühler, KPG-Rührer, Innenthermometer und Argoneinleitung, werden 250 mL Toluol vorgelegt und unter inerten Bedingungen 75,0 g (32,2 mmol) Siloxan A (OHZ 47,6 mg/g), 73,5 g (643,9 mmol) ε-Caprolacton und 100,6 g (644,0 mmol) Trimethylcaprolacton (Isomerengemisch) hinzugegeben. Die so hergestellte Reaktionsmischung wird erneut inertisiert und auf 80 °C geheizt, sodann 7,5 g (12,9 mmol MAO) Methylaluminoxanzubereitung (10 Gew% in Toluol), entsprechend 1 mol% bez. auf Gesamtlactonmenge hinzugegeben und 24 h bei 80 °C gerührt. Nach beendeter Reaktion wird das Lösungsmittel am Rotationsverdampfer entfernt. *

Durch eine Nachdestillation bei 80 °C im Ölpumpenvakuum ($5 \cdot 10^{-2}$ mbar) wird sodann von sämtlichen flüchtigen Bestandteilen befreit. Es wird ein viskoses, leicht trübes Polymer erhalten. Die Molmassenverteilung beträgt laut GPC (THF): Mw = 18.816 g/mol und Mn = 12.618 g/mol. DSC-Analysen im Temperaturbereich von -50 bis 200 °C zeigen ein vollkommen amorphes Verhalten des Polymers. Die $^{1}H/^{13}C/^{29}Si$-NMR Spektren entsprechen den Erwartungen.

* Mögliche Desaktivierung des Katalysators:

Nach der Abdestillation des Toluols wird im gleichen Volumen Chloroform aufgenommen, welches zuvor mit einigen Tropfen konz. Salzsäure angesäuert wurde (10 Tropfen / 500 mL). Ein rasches Ausschütteln im Scheidetrichter zerstört den Katalysatorkomplex, welcher abfiltriert werden kann. Überschüssige Säure wird durch emeutes Ausschütteln mit verdünnter Kaliumhydrogencarbonatlösung abgefangen und das Lösungsmittel nach vorheriger Filtration am Rotationsverdampfer entfernt.

**Beispiel 6:**

**Herstellung eines [PTMCL-b-PDMS-b-PTMCL] Triblockpolymers mittels ROP von TMCL (40 mol/OH) gestartet auf einem hydroxyalkylfunktionalisierten Siloxan (Siloxan A) unter Methylaluminoxankatalyse (MAO)**

In einem 1 L Vierhalskolben, ausgestattet mit Rückflusskühler, KPG-Rührer, Innenthermometer und Argoneinleitung, werden 250 mL Toluol vorgelegt und unter inerten Bedingungen 39,7 g (16,8 mmol) Siloxan A (OHZ 47,6 mg/g) und 210,3 g (1,35 mol) Trimethylcaprolacton (Isomerengemisch) hinzugegeben. Die so hergestellte Reaktionsmischung wird erneut inertisiert und auf 80 °C geheizt, sodann 7,8 g bzw. 8,9 mL (13,5 mmol) Methylaluminoxanzubereitung (10 Gew% in Toluol), entsprechend 1 mol% bez. auf die Gesamtlactonmenge hinzugegeben und 24 h bei 80 °C gerührt. Nach beendeter Reaktion wird das Lösungsmittel am Rotationsverdampfer entfernt. Durch eine Nachdestillation bei 80 °C im Ölpumpenvakuum ($5 \cdot 10^{-2}$ mbar) wird sodann von sämtlichen flüchtigen Bestandteilen befreit. Es wird ein hochviskoses, leicht trübes Polymer erhalten. Die Molmassenverteilung beträgt laut GPC (THF): Mw = 18.816 g/mol und Mn = 12.618 g/mol. DSC-Analysen im Temperaturbereich von -50 bis 200 °C zeigen ein vollkommen amorphes Verhalten des Polymers. Die $^{1}H/^{13}C/^{29}Si$-NMR Spektren entsprechen den Erwartungen.

**Beispiel 7:**

**Herstellung eines [PES-b-PDMS-b-PES] Triblockpolymers mittels ROP von eCL/TMCL (20 mol/OH - 50/50) gestartet auf einem hydroxyalkylfunktionalisierten Siloxan (Siloxan B) unter Zinnkatalyse**

In einem 500 mL Vierhalskolben, ausgestattet mit Rückflusskühler, KPG-Rührer, Innenthermometer und Argoneinleitung werden unter inerten Bedingungen 129,9 g (22,2 mmol) Siloxan B (OHZ 19,2 mg/g), 50,7 g (444,2 mmol)

ε-Caprolacton und 69,4 g (444,2 mmol) Trimethylcaprolacton (Isomerengemisch) verrührt. Die so hergestellte Reaktionsmischung wird auf 150 °C geheizt, sodann 0,9 g (2,2 mmol) Zinn(II)octoat (0,25 mol% bez. auf Lacton bzw. 0,36 Gew% ad Gesamtansatz) hinzugegeben und weitere 8 Stunden bei 150 °C gerührt. Nach beendeter Reaktion wird bei 80 °C im Ölpumpenvakuum ($5 \cdot 10^{-2}$ mbar) von sämtlichen flüchtigen Bestandteilen befreit. Es wird ein viskoses, leicht trüb-gelbliches Polymer erhalten. Die Molmassenverteilung beträgt laut GPC (THF): Mw = 17.221 g/mol und Mn = 11.495 g/mol. DSC-Analysen im Temperaturbereich von -50 bis 200 °C zeigen ein vollkommen amorphes Verhalten des Polymers. Die $^{1}H/^{13}C/^{29}Si$-NMR Spektren entsprechen den Erwartungen.

**Beispiel 8:**

**Herstellung eines polyestermodifizierten Siloxans mittels ROP von eCL/TMCL (5 mol/OH-50/50) gestartet auf einem hydroxyalkylfunktionalisierten Siloxan (Siloxan C) unter Zinnkatalyse**

In einem 500 mL Vierhalskolben, ausgestattet mit Rückflusskühler, KPG-Rührer, Innenthermometer und Argoneinleitung werden unter inerten Bedingungen 76,9 g (32 mmol) Siloxan C (OHZ 187 mg KOH/g), 73,1 g (640,4 mmol) ε-Caprolacton und 100,1 g (640,8 mmol) Trimethylcaprolacton (Isomerengemisch) verrührt. Die so hergestellte Reaktionsmischung wird auf 150 °C geheizt, sodann 1,3 g (3,2 mmol) Zinn(II)octoat (0,25 mol% bez. auf Lacton bzw. 0,5 Gew% ad Gesamtansatz) hinzugegeben und weitere 8 Stunden bei 150 °C gerührt. Nach beendeter Reaktion wird bei 80 °C im Ölpumpenvakuum ($5 \cdot 10^{-2}$ mbar) von sämtlichen flüchtigen Bestandteilen befreit. Dabei werden 34 g Destillat und ein viskoses, leicht gelbliches Polymer erhalten. Die Molmassenverteilung beträgt laut GPC (THF): Mw = 35.336 g/mol und Mn = 6.149 g/mol. Die $^{1}H/^{13}C/^{29}Si$-NMR Spektren entsprechen den Erwartungen.

**Beispiel 9:**

**Herstellung eines polyestermodifizierten Siloxans mittels ROP von eCL/TMCL (20 mol/OH-50/50) gestartet auf einem hydroxyalkylfunktionalisierten Siloxan (Siloxan C) unter Zinnkatalyse**

In einem 500 mL Vierhalskolben, ausgestattet mit Rückflusskühler, KPG-Rührer, Innenthermometer und Argoneinleitung werden unter inerten Bedingungen 25 g (10,4 mmol) Siloxan C (OHZ 187 mg KOH/g), 95,0 g (832,3 mmol) ε-Caprolacton und 130,0 g (832,2 mmol) Trimethylcaprolacton (Isomerengemisch) verrührt. Die so hergestellte Reaktionsmischung wird auf 150 °C geheizt, sodann 1,3 g (3,2 mmol) Zinn(II)octoat (0,25 mol% bez. auf Lacton bzw. 0,5 Gew% ad Gesamtansatz) hinzugegeben und weitere 8 Stunden bei 150 °C gerührt. Nach beendeter Reaktion wird bei 80 °C im Ölpumpenvakuum ($5 \cdot 10^{-2}$ mbar) von sämtlichen flüchtigen Bestandteilen befreit. Dabei werden 42 g Destillat und ein viskoses, leicht gelbliches Polymer erhalten. Die Molmassenverteilung beträgt laut GPC (THF): Mw = 37.383 g/mol und Mn = 9.746 g/mol. Die $^{1}H/^{13}C/^{29}Si$-NMR Spektren entsprechen den Erwartungen.

**Beispiel 10:**

**Herstellung eines [PES-b-PDMS-b-PES] Triblockpolymers mit Carboxy-Endgruppen durch ROP von eCL/TMCL (20 mol/OH - 50/50) gestartet auf einem carboxyalkylfunktionalisierten Siloxan (Siloxan F) unter Zinnkatalyse**

In einem 500 mL Vierhalskolben, ausgestattet mit Rückflusskühler, KPG-Rührer, Innenthermometer und Argoneinleitung werden unter inerten Bedingungen 81,4 g (31,2 mmol) eines carboxyfunktionalisierten Siloxans (Siloxan F) (SZ 43 mg KOH/g), 71,2 g (623,8 mmol) ε-Caprolacton und 97,4 g (623,7 mmol) Trimethylcaprolacton (Isomerengemisch) verrührt. Die so hergestellte Reaktionsmischung wird auf 150 °C geheizt, sodann 1,3 g (3,2 mmol) Zinn(II)octoat (0,25 mol% bez. auf Lacton bzw. 0,5 Gew% ad Gesamtansatz) hinzugegeben und weitere 8 Stunden bei 150 °C gerührt. Nach beendeter Reaktion wird bei 80 °C im Ölpumpenvakuum ($5 \cdot 10^{-2}$ mbar) von sämtlichen flüchtigen Bestandteilen befreit. Dabei wird ein hochviskoses, leicht gelbliches Polymer erhalten. Die Molmassenverteilung beträgt laut GPC (THF): Mw = 10.124 g/mol und Mn = 7.801 g/mol. Die $^{1}H/^{13}C/^{29}Si$-NMR Spektren entsprechen den Erwartungen.

**Beispiel 11:**

**Herstellung eines [PES-b-PDMS-b-PES] Triblockpolymers mittels ROP von eCL/TMCL (20 mol/OH - 50/50) gestartet auf einem aminoalkylfunktionalisierten Siloxan (Siloxan E) unter Zinnkatalyse**

In einem 500 mL Vierhalskolben, ausgestattet mit Rückflusskühler, KPG-Rührer, Innenthermometer und Argoneinleitung werden unter inerten Bedingungen 71,2 g (33,1 mmol) Siloxan E (N-Gehalt: 1,3 w%), 75,5 g (661,3 mmol) ε-Caprolacton und 103,3 g (661,3 mmol) Trimethylcaprolacton (Isomerengemisch) verrührt. Die so hergestellte Reaktionsmischung wird auf 150 °C geheizt, sodann 1,3 g (3,2 mmol) Zinn(II)octoat (0,25 mol% bez. auf Lacton bzw. 0,5 Gew% ad Gesamtansatz) hinzugegeben und weitere 8 Stunden bei 150 °C gerührt. Nach beendeter Reaktion wird bei 80 °C im Ölpumpenvakuum ($5 \cdot 10^{-2}$ mbar) von sämtlichen flüchtigen Bestandteilen befreit. Dabei werden 44,7 g Destillat und ein viskoses, leicht gelbliches Polymer erhalten. Die Molmassenverteilung beträgt laut GPC (THF): Mw = 11.100 g/mol und Mn = 5.760 g/mol. Die $^{1}H/^{13}C/^{29}Si$-NMR Spektren entsprechen den Erwartungen.

**Beispiel 12:**

**Herstellung eines kammständig polyestermodifizierten Siloxans mittels ROP von eCL/TMCL (20 mol/OH - 50/50) gestartet auf einem polyethermodifizierten Siloxan (Siloxan D) unter Zinnkatalyse**

In einem 500 mL Vierhalskolben, ausgestattet mit Rückflusskühler, KPG-Rührer, Innenthermometer und Argoneinleitung werden unter inerten Bedingungen 92,1 g (29,2 mmol) Siloxan D (OHZ 89 mg KOH/g), 66,7 g (584,4 mmol) ε-Caprolacton und 91,3 g (584,4 mmol) Trimethylcaprolacton (Isomerengemisch) verrührt. Die so hergestellte Reaktionsmischung wird auf 150 °C geheizt, sodann 1,3 g (3,22 mmol) Zinn(II)octoat (0,25 mol% bez. auf Lacton bzw. 0,5 Gew% ad Gesamtansatz) hinzugegeben und weitere 8 Stunden bei 150 °C gerührt. Nach beendeter Reaktion wird bei 80 °C im Ölpumpenvakuum ($5 \cdot 10^{-2}$ mbar) von sämtlichen flüchtigen Bestandteilen befreit. Dabei werden 43,5 g Destillat gewonnen. Es wird ferner ein viskoses, leicht gelbliches Polymer erhalten. Die Molmassenverteilung beträgt laut GPC (THF): Mw = 11.244 g/mol und Mn = 3.959 g/mol. Die $^{1}H/^{13}C/^{29}Si$-NMR Spektren entsprechen den Erwartungen.

**Vergleichsbeispiel 13 (nicht erfindungsgemäß):**

**Herstellung eines [PES-b-PDMS-b-PES] Triblockpolymers mittels ROP von eCL (15 mol/OH) gestartet auf einem hydroxyalkylfunktionalisierten Siloxan (Siloxan A) unter Zinnkatalyse**

In einem 500 mL Vierhalskolben, ausgestattet mit Rückflusskühler, KPG-Rührer, Innenthermometer und Argoneinleitung werden unter inerten Bedingungen 55,9 g (24,0 mmol) Siloxan A (OHZ 47,6 mg/g) und 82,2 g (720,2 mmol) ε-Caprolacton verrührt. Die so hergestellte Reaktionsmischung wird auf 150 °C geheizt, sodann 0,7 g (2,2 mmol) Zinn(II)octoat (0,5 Gew% ad Gesamtansatz) hinzugegeben und weitere 8 Stunden bei 150 °C gerührt. Nach beendeter Reaktion wird bei 80 °C im Ölpumpenvakuum ($5 \cdot 10^{-2}$ mbar) von sämtlichen flüchtigen Bestandteilen befreit. Es wird nach dem Erkalten ein kristallines, leicht gelbliches Polymer erhalten, welches einen Schmelzbereich von 50 - 62 °C zeigt. Die Molmassenverteilung beträgt laut GPC (THF): Mw = 13.601 g/mol und Mn = 7.111 g/mol. Die $^{1}H/^{13}C/^{29}Si$-NMR Spektren entsprechen den Erwartungen.

**Vergleichsbeispiel 14 (nicht erfindungsgemäß):**

**Herstellung eines [PES-b-PDMS-b-PES] Triblockpolymers mittels ROP von eCL (20 mol/OH) gestartet auf einem hydroxyalkylfunktionalisierten Siloxan (Siloxan B) unter Zinnkatalyse**

In einem 500 mL Vierhalskolben, ausgestattet mit Rückflusskühler, KPG-Rührer, Innenthermometer und Argoneinleitung werden unter inerten Bedingungen 140,4 g (24,0 mmol) Siloxan B (OHZ 19,2 mg/g) und 109,6 g (960,6 mmol) ε-Caprolacton verrührt. Die so hergestellte Reaktionsmischung wird auf 150 °C geheizt, sodann 1,3 g (2,2 mmol) Zinn(II)octoat (0,5 Gew% ad Gesamtansatz) hinzugegeben und weitere 8 Stunden bei 150 °C gerührt. Nach beendeter Reaktion wird bei 80 °C im Ölpumpenvakuum ($5 \cdot 10^{-2}$ mbar) von sämtlichen flüchtigen Bestandteilen befreit. Es wird nach dem Erkalten ein kristallines, leicht gelbliches Polymer erhalten, welches gemäß DSC-Analysen im Temperaturbereich von -50 bis 200 °C einen Schmelzbereich von 50 - 58 °C zeigt. Die Molmassenverteilung beträgt laut GPC (THF): Mw = 17.603 g/mol und Mn = 10.731 g/mol. Die $^{1}H/^{13}C/^{29}Si$-NMR Spektren entsprechen den Erwartungen.

**Anwendungsbeispiele:**

In Ölen wie kosmetischen Ölen (Emollients) können Siliconadditive zur Erniedrigung der Oberflächenspannung und damit zur besseren Verteilbarkeit und verbessertem Hautgefühl beitragen. Auch die Dispergierungseigenschaften können dabei verbessert werden. Die Kompatibilität des Silicons mit dem kosmetischen Öl ist dabei eine wichtige Voraussetzung.

Die erfindungsgemäßen Produkte können, im Vergleich zu einfachen Polyester-Polysiloxan-Blockcopolymeren auf Caprolacton-Basis, leicht in eine Reihe von kosmetischen Ölen eingebracht und gelöst werden (siehe Tabelle 1).

**Tabelle 1:** Löslichkeit ausgewählter erfindungsgemäßer Polyester-Siloxane in einer Reihe von kosmetischen Ölen (Nomenklatur nach INCI):

| Polyester-Siloxan | Aggregats-Zustand bei 25 °C | Löslichkeit 0,2% in Diethylhexyl Carbonate [a] | Löslichkeit 0,2% in $C_{12-15}$ Alkyl Benzoate [b] | Löslichkeit 0,2% in Caprylic/ Capric Triglyceride [c] | Löslichkeit 0,2% in PPG-14 Butyl Ether [d] |
|---|---|---|---|---|---|
| **Beispiel 1** | Flüssig, amorph | klar löslich | klar löslich | klar löslich | unlöslich |
| **Beispiel 6** | Flüssig, amorph | klar löslich | klar löslich | klar löslich | klar löslich |
| **Beispiel 7** | Pastenartig, amorph | klar löslich | fast klar löslich, opak | klar löslich | unlöslich |
| **Vergleichs-beispiel 13** | Fest, kristallin | unlöslich | unlöslich | unlöslich | unlöslich |
| **Vergleichs-beispiel 14** | Fest, kristallin | unlöslich | unlöslich | unlöslich | unlöslich |

[a] Diethylhexyl Carbonate: Tegosoft® DEC (Evonik Goldschmidt GmbH), [b] $C_{12-15}$ Alkyl Benzoate: Tegosoft® TN (Evonik Goldschmidt GmbH), [c] Caprylic/Capric Triglyceride: Tegosoft® CT (Evonik Goldschmidt GmbH), [d] PPG-14 Butyl Ether: Tegosoft® PBE (Evonik Goldschmidt GmbH).

Tabelle 1 zeigt deutlich, dass die erfindungsgemäßen Polyester-Siloxane 1, 6 und 7 mit einem Anteil an TMCL im Polyesterblock eine gute Kompatibilität mit einer Reihe von kosmetischen Ölen aufweisen. Die Vergleichsbeispiele 13 und 14, die auf Polyesterblocks mit ausschließlich eCL beruhen, sind dagegen in allen 4 kosmetischen Ölen unlöslich.

Dadurch dass die erfindungsgemäßen Beispiele in den kosmetischen Ölen löslich sind, wird die Spreitung des Öls auf der Haut im Vergleich zum reinen Öl und im Vergleich zur Abmischung mit Vergleichsbeispiel 13 oder 14 spürbar verbessert.

## Patentansprüche

1. Polyester-Polysiloxan-Blockcopolymere, die mehrfach substituierte Lacton-Monomereinheiten aufweisen.

2. Polyester-Polysiloxan-Blockcopolymere nach Anspruch 1, **dadurch gekennzeichnet, dass** die Lacton-Monomereinheit mehrfach durch Alkylgruppen substituiert ist.

3. Polyester-Polysiloxan-Blockcopolymere nach Anspruch 2, **dadurch gekennzeichnet, dass** die Alkylgruppen Methylgruppen sind.

4. Polyester-Polysiloxan-Blockcopolymere nach zumindest einem der Ansprüche 1 bis 3, **dadurch gekennzeichnet, dass** mindestens drei mehrfach substituierte Lacton-Monomereinheiten und gegebenenfalls weitere nicht- oder einfachsubstituierte Lacton-Monomereinheiten enthalten sind.

5. Polyester-Polysiloxan-Blockcopolymere gemäß Anspruch 4, **dadurch gekennzeichnet, dass** die mehrfach substituierten Lacton-Monomereinheiten unabhängig voneinander gleich oder verschieden sind und mit der allgemeinen Formel (0) beschrieben werden:

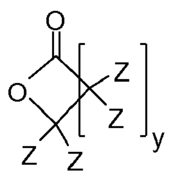

Formel (0)

wobei

Z = unabhängig voneinander gleiche oder verschiedene lineare oder verzweigte Alkylreste mit 1 bis 6 Kohlenstoffatomen oder Wasserstoff, bevorzugt Methyl oder Wasserstoff und
y = 1 bis 5, bevorzugt 2 bis 4, insbesondere 4,
mit der Maßgabe, dass
zumindest zwei der Reste Z in Formel (0) Alkylreste und kein Wasserstoff sind und mit der Maßgabe, dass der Lactonblock über SiC-Verknüpfung an das Siloxangerüst gebunden ist.

6. Polyester-Polysiloxan-Blockcopolymere gemäß Anspruch 5, **dadurch gekennzeichnet, dass** zumindest teilweise Trimethlycaprolacton zum Aufbau des Polyesterblocks eingesetzt wird und Verbindungen der allgemeinen Formel (I)

$$M_{2+f+2g-a-b}\, M'_a\, M''_b\, D_c\, D'_d\, D''_e\, T_f\, Q_g \qquad \text{Formel (I)}$$

mit

M = $(R^1_3SiO_{1/2})$,
M' = $(R^1_2R^2SiO_{1/2})$,
M'' = $(R^1_2R^3SiO_{1/2})$,
D = $(R^1_2SiO_{2/2})$,
D' = $(R^1R^2SiO_{2/2})$,
D'' = $(R^1R^3SiO_{2/2})$,
T = $(R^1SiO_{3/2})$ und
Q = $(SiO_{4/2})$;

mit

a = 0 bis 10,
b = 0 bis 15,
c = 0 bis 350,
d = 0 bis 50,
e = 0 bis 100,
f = 0 bis 12,
g = 0 bis 8,

mit der Maßgabe, dass

$$b + e \geq 1$$

ist;
wobei
**$R^1$** = unabhängig voneinander gleiche oder verschiedene lineare oder verzweigte, gegebenenfalls aromatische Kohlenwasserstoffreste mit 1 bis 30 Kohlenstoffatomen, die gegebenenfalls Hydroxyl- oder Esterfunktionen tragen, bevorzugt Methyl oder Phenyl, insbesondere Methyl,
**$R^2$** = unabhängig voneinander gleiche oder verschiedene Polyetherreste, oder solche Reste der Formel (II)

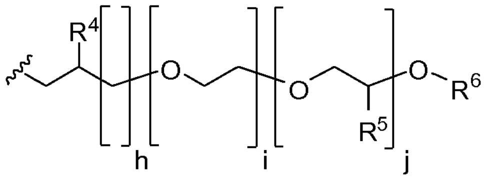

Formel (II)

und
**$R^3$** = unabhängig voneinander gleiche oder verschiedene Reste der allgemeinen Formeln (IIIa) oder (IIIb)

**-A (BC)k** Formel (IIIa),

**-A (B'C')k** Formel (IIIb),

wobei
**C** = unabhängig voneinander gleiche oder verschiedene Polyesterreste der Formel (IV)

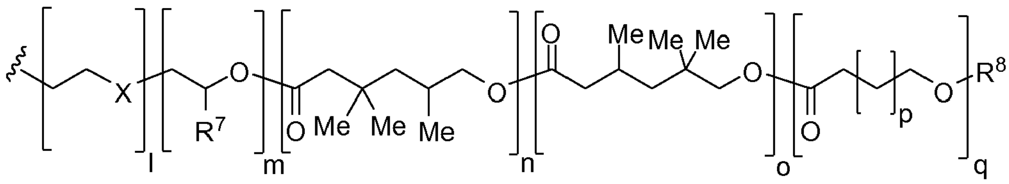

Formel (IV),

**B** = unabhängig voneinander gleiche oder verschiedene zweibindige Heteroatom-Gruppen, bevorzugt ein Rest der Gruppe -O-, -NH-, $-NR^{14}-$,
**A** = unabhängig voneinander gleich oder verschieden ein (k+1)-bindiger organischer Rest, bevorzugt ein Rest der Gruppe:- $CH_2-CHR^9-(CH_2)_r-$,

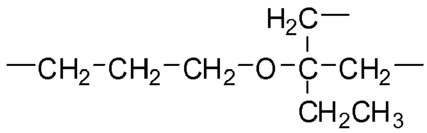
,

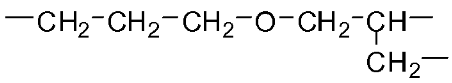
,

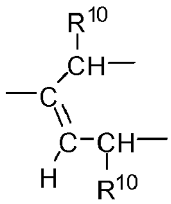
,

**C'** = unabhängig voneinander gleiche oder verschiedene Polyesterreste der Formel (V)

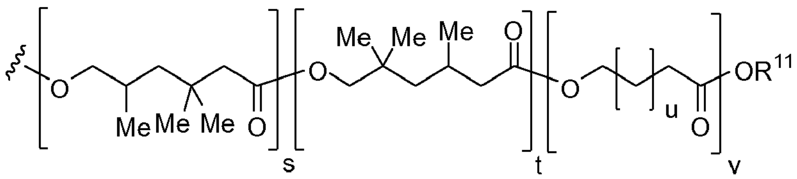
Formel (V),

**B'** = unabhängig voneinander gleiche oder verschiedene zweibindige carbonylgruppenhaltige Reste, bevorzugt ein Rest der Gruppe:

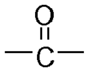,

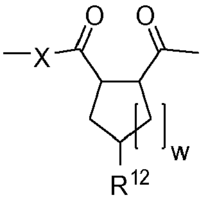,

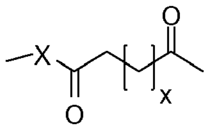,

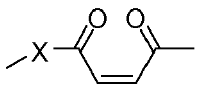,

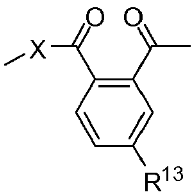,

sind,
mit
X = unabhängig voneinander gleich oder verschieden O oder NH, bevorzugt Sauerstoff O,
$R^4$, $R^9$ = unabhängig voneinander gleiche oder verschiedene lineare oder verzweigte Alkylreste mit 1 bis 16 Kohlenstoffatomen oder Wasserstoff, bevorzugt Methyl oder Wasserstoff, insbesondere Wasserstoff, $R^5$, $R^7$ = unabhängig voneinander gleiche oder verschiedene Alkyl- oder Arylreste, bevorzugt Methyl, Ethyl oder Phenyl, insbesondere Methyl,
$R^6$ = unabhängig voneinander gleiche oder verschiedene, gegebenenfalls verzweigte Alkylreste oder ein Acylrest, bevorzugt Methyl oder Acetyl, $R^8$, $R^{10}$, $R^{11}$, $R^{12}$, $R^{13}$ = unabhängig voneinander gleiche oder verschiedene lineare oder verzweigte Alkylreste mit 1 bis 16 Kohlenstoffatomen oder Wasserstoff, bevorzugt Methyl oder Wasserstoff, insbesondere Wasserstoff, und $R^{14}$ = unabhängig voneinander gleiche oder verschiedene lineare oder verzweigte Alkylreste mit 1 bis 16 Kohlenstoffatomen, insbesondere Methyl;
sowie
h = 0 bis 22, bevorzugt 0 bis 9,
i = 0 bis 50, bevorzugt 0 bis 30,
j = 0 bis 50, bevorzugt 0 bis 30,
k = 1 bis 3, bevorzugt 1 bis 2, ,
l = 0 bis 50, bevorzugt 0 bis 30,
m = 0 bis 50, bevorzugt 0 bis 30,
n, o, s, t = 0 bis 50, bevorzugt 1 bis 30,
p, u = 1 bis 4, bevorzugt 2 bis 3,
q, v = 0 bis 50, bevorzugt 0 bis 30,

r = 0 bis 22, bevorzugt 1 bis 9,
w = 1 bis 5, bevorzugt 1 bis 3 und
x = 1 bis 4, bevorzugt 1 bis 3 ist,
mit der Maßgabe, dass
$n + o \geq 2$ oder $s + t \geq 2$ ist.

**7.** Polyester-Polysiloxan-Blockcopolymere gemäß Anspruch 6, Formel (I) mit $(n+o)/q$ bzw. $(s+t)/v \geq 1$.

**8.** Polyester-Polysiloxan-Blockcopolymere gemäß Anspruch 6, **dadurch gekennzeichnet, dass** $f+g \geq 1$ und $b \geq 3$.

**9.** Polyester-Polysiloxan-Blockcopolymere gemäß zumindest einem der Ansprüche 6 bis 8 mit $d \geq 2$ gilt.

**10.** Polyester-Polysiloxan-Blockcopolymere gemäß zumindest einem der Ansprüche 6 bis 9 mit X =O und $I \geq 3$ gilt.

**11.** Verfahren zur Herstellung von Polyester-Polysiloxan-Blockcopolymere gemäß einem der Ansprüche 1 bis 10, **dadurch gekennzeichnet, dass** OH-, NRH- oder COOH-funktionellen Silicon-Makroinitiatoren mit Trimethylcaprolacton sowie gegebenenfalls weiteren Lactonen zu Polyester-Polysiloxan-Blockcopolymeren der Formel (I) mit Hilfe der Katalysatoren umgesetzt werden.

**12.** Verfahren zur Herstellung von Polyester-Polysiloxan-Blockcopolymere gemäß einem der Ansprüche 1 bis 10, **dadurch gekennzeichnet, dass** als Katalysator Methylaluminoxan MAO oder Bismuth(III)-triflat verwendet wird.

**13.** Zusammensetzungen enthaltend Polyester-Polysiloxan-Blockcopolymere gemäß mindestens einem der Ansprüche 1 bis 10.

**14.** Verwendung der Zusammensetzungen nach Anspruch 13 als Additiv zur Herstellung kosmetischen, dermatologischen oder pharmazeutischen Formulierungen sowie zur Herstellung dispergierte Feststoffe enthaltender Pflege- und Reinigungsmittel für Haushalt oder Industrie für harte Oberflächen, Leder oder Textilien.

**15.** Verwendung mindestens einer der Zusammensetzungen nach Anspruch 13 zur Herstellung von Formulierungen für den Agrobereich oder als Additive in Lacken oder Kunststoffen.

Europäisches Patentamt
European Patent Office
Office européen des brevets

# EUROPÄISCHER RECHERCHENBERICHT

Nummer der Anmeldung
EP 11 16 9046

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 19 22 595 A1 (UNION CARBIDE CORP) 13. November 1969 (1969-11-13) * Seiten 1,22 * * Seiten 18-19 * ----- | 1-5, 12-15 | INV. C08G77/445 C08L83/10 |

RECHERCHIERTE SACHGEBIETE (IPC)
C08G
C08L

Der vorliegende Recherchenbericht wurde für alle Patentansprüche erstellt

| Recherchenort | Abschlußdatum der Recherche | Prüfer |
|---|---|---|
| Den Haag | 22. September 2011 | Dalet, Pierre |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.........................................................................................................
& : Mitglied der gleichen Patentfamilie, übereinstimmendes Dokument

2

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 11 16 9046

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-09-2011

| Im Recherchenbericht angeführtes Patentdokument | Datum der Veröffentlichung | Mitglied(er) der Patentfamilie | Datum der Veröffentlichung |
|---|---|---|---|
| DE 1922595 A1 | 13-11-1969 | BE 732420 A | 03-11-1969 |
| | | FR 2007788 A1 | 09-01-1970 |
| | | GB 1277311 A | 14-06-1972 |
| | | JP 50039648 B | 18-12-1975 |
| | | NL 6906729 A | 05-11-1969 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 4663413 A
- US 3778458 A
- US 5194473 A
- US 7196153 B
- DE 102008041601
- DE 102007055485
- US 3775452 A
- EP 1520870 A
- DE 102008001788


### In der Beschreibung aufgeführte Nicht-Patentliteratur


- **YILGÖR et al.** *Journal of Polymer Science (Part A: Polymer Chemistry),* 1989, vol. 27, 3673-3690
- **LOVINGER et al.** *Journal of Polymer Science (Part B: Polymer Physics),* 1993, vol. 31, 115-123
- **KRICHELDORF et al.** *Macromol. Biosci.,* 2001, vol. 1, 364-369
- **CLARSON et al.** *Silicon,* 2009, vol. 1, 165-172
- Chemie und Technologie der Silikone. Verlag Chemie, 1960, 43